# EUROPÄISCHE PATENTSCHRIFT

(11) **EP 4 390 888 B1**
(45) Veröffentlichungstag und Bekanntmachung des Hinweises auf die Patenterteilung: **29.01.2025**
(21) Anmeldenummer: 22216612.6
(22) Anmeldetag: 23.12.2022
(51) Int. Cl.: G08B 17/12, C08B 9/00, C03B 9/00

(54) **VERFAHREN ZUR BRANDERKENNUNG BEI PRODUKTIONSMASCHINEN UND PRODUKTIONSMASCHINE**
METHOD FOR DETECTING FIRES IN PRODUCTION MACHINES AND PRODUCTION MACHINE
PROCÉDÉ DE DÉTECTION D'INCENDIE DANS DES MACHINES DE PRODUCTION ET MACHINE DE PRODUCTION

(43) Veröffentlichungstag der Anmeldung: 26.06.2024
(73) Patentinhaber: Bucher Automation Tettnang GmbH, 88069 Tettnang (DE)
(72) Erfinder: Pawlowski, Florian, 45279 Essen (DE); Meersschaut, Marc, 88214 Ravensburg (DE)
(74) Vertreter: Christ, Niko

(56) Entgegenhaltungen:
- EP-A2- 2 669 258
- WO-A1-2020/148625
- DE-A1- 19 722 921
- KR-B1- 101 663 489

## Beschreibung

Die vorliegende Erfindung betrifft ein Verfahren zur Branderkennung bei Maschinen zur Herstellung von Hohlglas, wobei ein Herstellungsprozess an einer Produktionsmaschine mithilfe einer Prozesssteuerung gesteuert und die Produktionsmaschine von Mitteln zur Branderkennung permanent überwacht wird.

Ein solches Verfahren ist bereits aus der KR 101663489 vorbekannt. Dieses betrifft eine Produktionsmaschine, der Mittel zur Branderkennung zugeordnet sind, welche in Alarmsignal erzeugen und an eine Prozesssteuerung weiterleiten. Zudem ist ein Verfahren zur Branderkennung bereits aus der EP 0 673 008 B1 vorbekannt. Dort ist ein Brandüberwachungssystem für einen Müllbunker beschrieben, welcher mit zwei Infrarotkameras arbeitet, welche Wärmebilder erstellen und bei der Feststellung von Überschreitungen eines Schwellenwerts eine Alarmsignalisierung an eine Prozesssteuerung übermitteln. Diese beginnt selbsttätig mit einem Löschvorgang, etwa unter Zuhilfenahme eines Greifers des Müllbunkers.

Ein weiteres Verfahren ist aus der JP 2021-045723 A vorbekannt, bei dem ebenfalls eine Bearbeitung von Müll mithilfe eines Förderbands erfolgt. Bei Erkennung eines Brandes auf einem Förderband mithilfe einer Infrarotkamera werden die Förderbänder entsprechend angesteuert und der Müll wird separiert.

Weiter ist aus der WO 2019/224122 A1 ein Feueralarm-Netzwerk mit einer zentralen Steuerungseinheit und mehreren vernetzten Feuermeldesystemen bekannt, die eine Infrarotkamera beinhalten. Ähnlich arbeiten auch die Gegenstände der EP 2 492 883 A1 und der EP 2 984 640 B1.

Allgemein ist es bekannt, dass neben der möglichen Brandgefahr bei Abfällen, die etwa schwelende Brandherde wie Zigarettenkippen enthalten können, auch bei industriellen Herstellungsprozessen hohe Temperaturen auftreten können. Wie auch im Wesentlichen im Stand der Technik wird mit Löschvorgängen auf einen Brand reagiert, was in aller Regel auch sinnvoll erscheint. Abhängig von den äußeren Umständen des Brandes und den Produktionshintergründen kann ein sofortiges Löschen des Brandes, insbesondere wenn dies verbunden ist mit einem Abschalten der Produktionsmaschinen und ihrer zu- und abführenden Maschinen, problematisch sein.

Gemäß der Erfindung soll vorliegend die Herstellung von Hohlglas herangezogen werden.

Im Produktionsverfahren fließt zunächst geschmolzenes Glas aus einer Schmelzwanne in einen Feeder. Unter dem Feederbecken ist ein Scherenmechanismus vorgesehen, der einzelne dort gebildete Tropfen abschert, welche über einen Tropfenverteiler einer Vorform zugeleitet werden. Beim Blas-Blas-Verfahren wird durch einen ersten Blasvorgang das Glas in den unteren Teil, der Mündung und Vorform gepresst. An der Mündung ist ein Pegel gebildet, um den herum das Glas einen Formling bildet. Durch ein Herausziehen des Pegels verbleibt im Formling ein Hohlraum, in den sodann Druckluft eingeleitet wird, um den Formling aufzublähen, bis er ein dünnwandiges, an der Innenwandung der Vorform anliegendes Külbel bildet. Dieses wird in eine Fertigform transportiert und dort mit Druckluft weiter in eine endgültige Form gebracht.

Bei dem alternativen Press-Blas-Verfahren wird zunächst durch Druckbeaufschlagung der Pegel als eine Art Stempel ausgestaltet, in die Vorform gepresst und das Glas so zu einem Külbel vorgeformt, die Endformung erfolgt allerdings wieder mithilfe von Druckluft.

Gerade bei einem solchen Verfahren ist das Entstehen von Bränden besonders begünstigt, da das heiße Material insbesondere im Kontakt mit Maschinenöl und Schmierfett, wie es an den beweglichen Teilen und Formteilen der Produktionsmaschinen zur Schmierung erforderlich ist, leicht zu Bränden führen kann. Die zusätzliche Verwendung von Druckluft im Produktionsprozess sowie die Verwendung von Kühlluft zur Temperierung der Produktionsmaschinen kann solche Brandherde weiter anfachen.

Zunächst besteht das Problem allerdings darin, dass der Maschinenbediener permanent vor Ort sein muss und auch dann nicht in der Lage ist, den kompletten Bereich von mehreren Ebenen zu überblicken. Dann muss er zunächst einen Brand überhaupt erkennen und als solchen einschätzen, sowie die notwendigen Schritte wie etwa die Aktivierung des Not-Halts ausführen. Jedes System von der Zuführung über den Materialtransport, die Kühlung und Schmierung, insbesondere die Produktionsmaschine selbst, bis hin zur Abführung der Produkte, hat seinen eigenen Not-Halt. Einen globalen Not-Halt für alle zugehörigen Systeme gibt es nicht zwangsläufig. Dadurch ist nicht gewährleistet, dass alle System auch sicher und spannungsfrei abgeschaltet werden.

Ein weiteres Problem ist der Not-Halt an sich, dadurch bleiben die Produktionsmaschine und die Transportbänder abrupt stehen. Dies bedeutet, dass die Produktionsmaschine voll unter heißem glühenden Glas steht und sich die Temperatur in und um die Maschine durch die ebenfalls abgeschaltete Kühlung stark erhöht, so dass sich unter Umständen ein kleiner lokaler Ölbrand schnell auf weitere Bereiche erstreckt. Zudem stellen die glühenden Glasbehälter in der Maschine und auf dem Transportband eine Gefahr für das brandbekämpfende Personal dar.

Vor diesem Hintergrund liegt der vorliegenden Erfindung die Aufgabe zu Grunde, ein Verfahren zur Branderkennung bei industriellen Produktionsmaschinen, sowie eine solche Produktionsmaschine anzugeben, welche auch bei hohen Produktionstemperaturen vor Beginn eines Löschvorgangs selbsttätig einen sicheren Zustand schaffen, um die Gefahr eines Großbrandes für Mensch und Maschine zu verringern.

Gelöst wird diese Aufgabe durch ein Verfahren zur Branderkennung gemäß den Merkmalen des unabhängigen Anspruchs 1. Sinnvolle Ausgestaltungen eines solchen Verfahrens können den sich anschließenden abhängigen Ansprüchen entnommen werden.

Vorgesehen ist insoweit ein Verfahren zur Branderkennung bei industriellen Produktionsmaschinen zur Herstellung von Hohlglas, wobei ein Herstellungsprozess an einer Produktionsmaschine mithilfe einer Prozesssteuerung gesteuert und die Produktionsmaschine von Mitteln zur Branderkennung permanent überwacht wird. Dieses ist erfindungsgemäß dadurch gekennzeichnet, dass in einem ersten Schritt die Mittel zur Branderkennung ein Alarmsignal erzeugen und an die Prozesssteuerung übermitteln, in einem zweiten Schritt die Prozesssteuerung die Anforderung von Material für den Herstellungsprozess beendet und weiteres Material in einem brandsicheren Rückhalt zurückgehalten wird, während die Produktionsmaschine bereits eingelegtes Material verarbeitet oder auswirft und danach gestoppt wird und in einem dritten Schritt alle Material zuführenden und Produkte abführenden Maschinen gestoppt werden.

Während also eine permanente Überwachung der Produktionsmaschinen durch geeignete Mittel erfolgt, wird im Fall eines erkannten Brandes ein Alarmsignal erzeugt und an die Prozesssteuerung weitergeleitet. Die Prozesssteuerung ergreift dann in einem zweiten und dritten Schritt weitere Maßnahmen um einen sicheren Zustand herzustellen. Zunächst wird hierzu die Materialanforderung für die gesamte Maschine gestoppt, so dass kein zusätzliches Material mehr in die Produktionsmaschine gelangt. Im Fall der Glasherstellung bedeutet dies, dass die Tropfenanforderung beendet und der Tropfenverteiler deaktiviert und ausgeschwenkt wird. Es wird dadurch verhindert, dass weiteres flüssiges Glas in die Produktionsmaschine geführt wird und diese weiter erhitzt. In der Schmelzwanne und im Schmelzofen vorgehaltenes Glas verbleibt dort in einem brandsicheren Rückhalt.

Darüber hinaus wird in einem weiteren Schritt die Produktionsmaschine entleert. Dies kann je nach Produktionsschritt, in dem sich die Produktionsmaschine jeweils befindet, bedeuten, dass das Material wieder ausgeworfen und abgeführt wird, oder dass die Produktionsmaschine das begonnene Produkt fertig produziert und dann auswirft. Die einzelnen Stationen werden auf diese Weise in einen kontrollierten Stationsstopp gebracht. Jede Station läuft zwei Zyklen weiter und bleibt dann stehen. Parallel dazu kann bereits die Kühlung und Schmierung deaktiviert werden, wodurch die Brandbeschleunigung durch Kühlluft und brennbares Schmiermittel entfällt.

Der Auswurf von fertiggestellten Produkten kann ordnungsgemäß auf zunächst noch weiterlaufende Transportbänder erfolgen, die erst in einem dritten Schritt mit sämtlichen zu- und abführenden Systemen abgeschaltet werden. Nun erfolgt der Not-Halt des Systems, wodurch sich alle Steuerungs- und Antriebssysteme im Umfeld der Produktionsmaschine in einem sicheren Stopp befinden. In diesem Zustand sind alle angebundenen Systeme ausgeschaltet, vor unbeabsichtigtem Wiedereinschalten gesichert und spannungsfrei, um mit der Brandbekämpfung zu beginnen.

In besonders bevorzugter Ausgestaltung der Erfindung kann es vorgesehen sein, dass die Mittel zur Branderkennung wenigstens eine Infrarotkamera umfassen, welche auf die Produktionsmaschine oder auf Teile davon ausgerichtet ist und ein Wärmebild erzeugt, wobei im Fall einer Überschreitung wenigstens eines Wärmeschwellwerts ein Alarmsignal an die Prozesssteuerung übermittelt wird. Der Einsatz solcher Infrarotkameras erlaubt eine flächendeckende Überwachung im Bereich der Produktionsmaschine, da das gesamte Sichtfeld einer Infrarotkamera von dieser überwacht wird, wohingegen mit Temperaturfühlern nur ein sehr konkreter, eingegrenzter Bereich überwacht werden kann. Die Infrarotkameras erfassen ein Wärmebild, in welchem die Wärmeabstrahlung eines Punkts durch entsprechende Farbgebung codiert wird. Durch geeignete Bilderkennungsverfahren kann festgestellt werden, ob in dem Bild ein Wärmeschwellwert überschritten wird und in diesem Fall ein Alarm ausgelöst werden.

In weiterer konkreter Ausgestaltung kann dies so umgesetzt sein, dass ein Sichtfeld der Infrarotkamera in Bereiche unterteilt ist und einem oder mehreren Bereichen ein eigener Wärmeschwellwert zugeordnet ist. Es können dadurch Bereiche definiert werden, welche hohe Temperaturen erreichen dürfen ohne einen Alarm auszulösen und andere Bereiche bereits bei deutlich niedrigeren Temperaturen einen Brand vermuten lassen und einen Alarm auslösen.

Für eine sichere Funktion der Infrarotkameras kann es weiter sinnvoll sein, wenn den Infrarotkameras im Bereich ihrer Kameralinsen Luftdüsen zugeordnet sind, welche ein Luftschild zum Schutz der Kameralinsen vor Schmutz erzeugen. Durch ein solches Luftschild kann der Schmutz als solche von den Kameralinsen weggehalten werden, während die bildgebende Strahlung dennoch auf die Kameralinse treffen kann.

Ergänzend können auch reine Mittel zur manuellen Brandmeldung vorgesehen sein, die etwa als Schlagtaster ausgestaltet sind. Nimmt das Personal einen Brand bereits in einem frühen Stadium wahr oder ereignet sich dieser außerhalb des Sichtbereichs aller Infrarotkameras, so kann auf diese Weise eine Alarmsignalisierung ebenfalls manuell an die Prozesssteuerung erfolgen. Mit besonderem Vorteil sieht der Schlagtaster zusätzlich einen Quittierschalter vor, mit dem der Alarm wieder abgestellt werden kann. Die begonnenen erfindungsgemäßen Vorkehrungen werden dann wieder beendet. In konkreter Ausgestaltung kann auf diese Weise nur der manuelle Alarm quittiert werden.

Ergänzend kann vorgesehen sein, dass nach dem dritten Schritt in einem vierten Schritt wenigstens eine Löschvorrichtung zur Benetzung der Oberflächen der Produktionsmaschine mit einem Löschmittel zugeschaltet wird. Dies kann konkret durch Sprinkler gelöst werden, welche im Bereich der Produktionsmaschine und an den weiteren Orten mit Brandgefahr angeordnet sein können.

Weiter kann es sinnvoll sein, wenn die Prozesssteuerung in Reaktion auf den ersten Schritt einen visuellen und/oder einen akustischen Alarm durch Betätigung von Signalgebern auslöst. Ein solcher Alarm signalisiert dem Personal im Bereich der Produktionsmaschine dass ein Brand erkannt wurde und dass geeignete Maßnahmen ergriffen werden müssen. Über geeignete Signalgeber, sei es durch akustische oder optische Signalgeber, aber auch durch elektronische Meldungen auf Smartgeräte, die wiederum haptische Signale abgeben können, erfolgt die Alarmsignalisierung an das Personal, das zum Einen dafür sorgen kann, dass Mensch und Maschine in einen sicheren Zustand gebracht und sodann auch der Brand bekämpft werden kann.

Die vorstehend beschriebene Erfindung wird im Folgenden anhand eines Ausführungsbeispiels näher erläutert.

Es zeigen
- Figur 1: eine Produktionsmaschine zur Herstellung von Hohlglas in einer schematischen Übersichtsdarstellung von oben,
- Figur 2: ein exemplarisches Wärmebild einer Infrarotkamera in schematischer Darstellung, sowie
- Figur 3: einen Ablaufplan eines Verfahrens zur Branderkennung an einer Produktionsmaschine in einem schematischen Flussdiagramm.

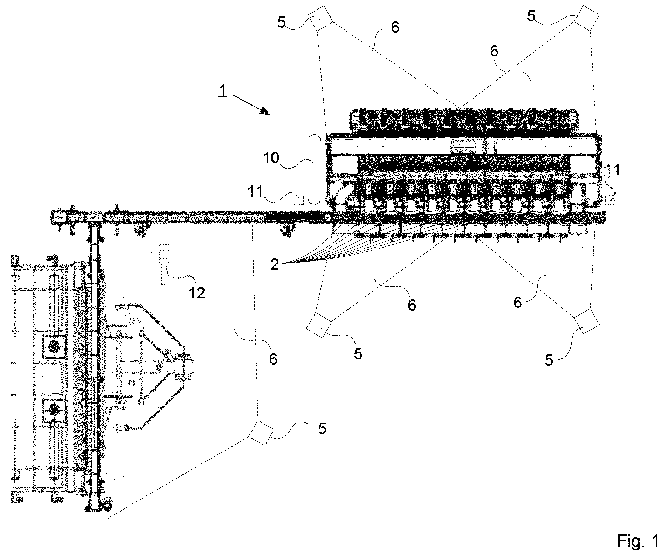

Figur 1 zeigt eine Produktionsmaschine 1 mit ergänzenden Geräten und Maschinen in einer Draufsicht von oben. Es handelt sich um eine Produktionsmaschine 1 zur Herstellung von Hohlglas, also von Glasflaschen, Glasbehältern wie Konservengläsern und dergleichen mehr. Bei der Produktionsmaschine 1 handelt es sich um eine IS-Maschine, die also individuelle Sektionen 2 aufweist, in denen parallel Produkte 9, nämlich Glasflaschen, produziert werden. Da die Produktionsmaschine 1 einerseits mit flüssigem Glas arbeitet, das nach dem Schmelzen eine Temperatur von etwa 1100 °C besitzt und bei einer solchen Temperatur der Verarbeitung zugeführt wird, andererseits auch geschmiert werden muss, um ihre Funktion mit beweglichen Teilen zu gewährleisten, muss die Brandgefahr in der Produktionsmaschine 1 als nennenswert angesehen werden. Hierfür sind der Produktionsmaschine 1 mehrere verteilte Infrarotkameras 5 als Mittel zur Branderkennung zugeordnet, welche die einzelnen Sektionen 2 der Produktionsmaschine 1 abdecken und zumindest übliche Brandherde beobachten. Die Sichtfelder 6 der Infrarotkameras 5 sind so ausgerichtet, dass die Produktion überwacht wird, aber auch allgemeine Übersichtsbereiche abgedeckt werden.

Kommt es an der Produktionsmaschine 1 zu einem Brand, was etwa durch einen unsauber geführten Glastropfen am Tropfenverteiler der Fall sein kann, welcher herabfällt, durch einen Luftstrom der Kühlung oder durch entweichende Druckluft aus dem Produktionsprozess zu einem Brand angefacht wird und auf weitere Bereich übergreift, wird dieser von wenigstens einer Infrarotkamera 5 bereits in einem frühen Stadium erkannt und eine Alarmsignalisierung an eine Prozesssteuerung 10 übermittelt. Die Prozesssteuerung 10 ist in der Figur 1 exemplarisch in unmittelbarer Nähe der Produktionsmaschine 1 gezeichnet, kann sich aber zur Sicherheit in größerem Abstand befinden, solange allerdings die betriebssichere Datenübertragung zur Prozesssteuerung 10 gewährleistet ist.

Ergänzend zu der automatischen Erfassung durch die Infrarotkameras 5 sind im Feld zusätzliche Schlagtaster 11 verteilt, mit deren Hilfe auch das Personal einen Alarm signalisieren kann, etwa wenn ein Brand bereits in einem sehr frühen Stadium zufällig gesehen wird, bevor die Wahrnehmungsschwellen der Infrarotkameras 5 erreicht werden oder diese außerhalb von deren Sichtfeldern 6 liegen. Die Schlagtaster 11 sind ergänzend mit Quittierschaltern ausgestattet, mit denen eine versehentliche mechanische Auslösung eines Alarms quittiert und der Alarm abgestellt werden kann. Ein Signalgeber 12 verursacht sowohl einen optischen Alarm über ein Signallicht, als auch einen akustischen Alarm über eine Sirene, sobald, sei es durch die Infrarotkameras 5 oder manuell über einen Schlagtaster 11, ein Alarm ausgelöst wird.

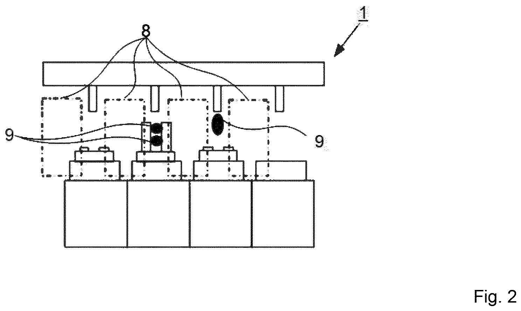

Figur 2 zeigt eine schematische Darstellung eines Wärmebilds 7 einer Infrarotkamera 5, welche in einen Produktionsbereich der Produktionsmaschine 1 gerichtet ist. Es sind Produkte 9 in Form von Glastropfen bzw. Külbel darauf dargestellt, sowie ein für die Funktion der Infrarotkamera 5 wesentlicher Bereich 8. Es besteht eine hohe Temperatur Fertigungsbereich der Produkte 9, da dort die Konzentration heißen Glases am größten ist. Überwacht wird allerdings nur der Bereich 8, in welchem ein bestimmter Schwellenwert nicht überschritten werden soll. Wird dieser Schwellenwert nun etwa außerhalb des Bereich 8, im Tropfenfall und Schwenkbereich überschritten, so befindet sich dieser Bereich außerhalb des überwachten Bereichs 8 und dies ist produktionsbedingt zulässig. Wird allerdings der Schwellenwert innerhalb des Bereichs 8 überschritten, so weicht dies von den Vorgaben ab und verursacht eine Alarmsignalisierung der betreffenden Infrarotkamera 5 an die Prozesssteuerung 10.

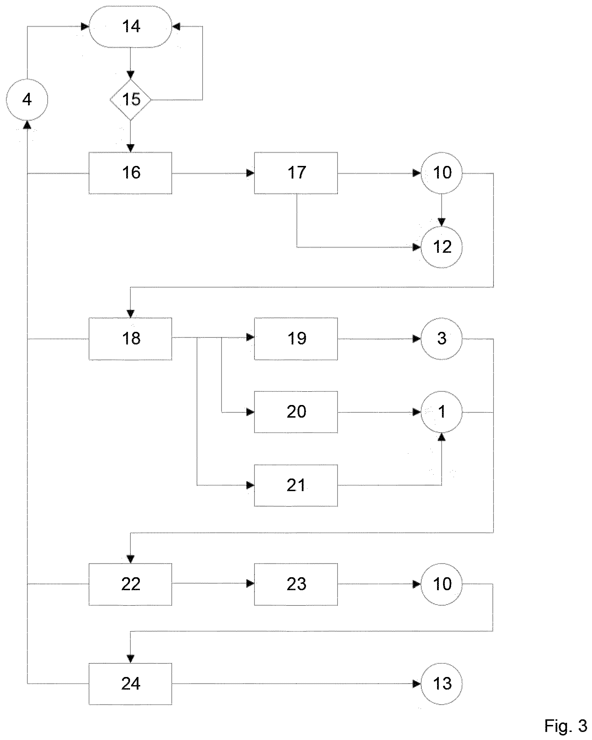

Figur 3 verdeutlicht den folgenden Ablauf. Zunächst befindet sich in dem Ablaufdiagramm das System in einem Zustand permanenter Überwachung 14. Hierbei stellt sich durchgehend die Frage 15, ob der Schwellwert in einem der Wärmebilder 7, wie in Figur 2 dargestellt, überschritten wird. So lange dies nicht der Fall ist, wird die Überwachung 14 fortgesetzt.

Wird der Schwellenwert jedoch überschritten, so beginnt der erste Schritt 16 der Reaktion des Systems. In diesem ersten Schritt 16 erfolgt die Übermittlung eines Alarmsignals 17, zunächst und in erster Linie an die Prozesssteuerung 10. Parallel kann dies auch direkt an die Signalgeber 12 erfolgen, alternativ kann die Weiterleitung des Alarmsignals aber auch über die Prozesssteuerung erfolgen.

Praktisch unmittelbar auf den ersten Schritt 16 folgt der zweite Schritt 18. Ein Zuwarten für eine Karenzzeit ist hierbei wahlweise möglich, um die Möglichkeit offen zu halten, über eine Quittierung 4 zurück aus dem Alarmfall in die permanente Überwachung zu wechseln. Dies ist jederzeit möglich, wobei die Quittierung 4 über die Prozesssteuerung 10 oder manuell über Quittierschalter an den Schlagtastern 11 erfolgen kann.

Im zweiten Schritt 18 werden seitens der Prozesssteuerung 10 bereits erste Maßnahmen ergriffen, welche jedoch nicht die sofortige Abschaltung der Maschinen oder gar Löschmaßnahmen umfassen, sondern zunächst einen sicheren Zustand schaffen sollen. Hierzu wird in einem Teilschritt 19 die Anforderung von Material bei dem Tropfenverteiler 3 beendet, wozu auch die Beendung von Kühlung und Schmierung gehört, um dem Brand die Grundlage zu entziehen. Weiter wird die Verarbeitung von Material durch die Produktionsmaschine 1 veranlasst, welche durch das Weiterarbeiten um zwei Produktionszyklen das eingesetzte Material abarbeitet und letztlich die noch hergestellten Produkte 9 geordnet auswirft. Diese werden noch durch die Transportmittel des Systems, etwa über ein Förderband, abtransportiert und Richtung Kühlbahn zugeführt.

Wenn nunmehr das Material soweit es die Produktionsmaschine 1 erreicht hat, abgearbeitet und soweit dies noch nicht der Fall war zurückgehalten ist, folgt ein dritter Schritt 22, in dem in einem Teilschritt 23 die zuführenden und abführenden Maschinen gestoppt und spannungsfrei geschaltet werden. Dies sorgt dafür, dass nun mit Löschmitteln wie Wasser gearbeitet werden kann, ohne dass Gefahren durch elektrische Spannung geschaffen werden. Nach einer Rückmeldung an die Prozesssteuerung 10 kann nun ein vierter Schritt 24 folgen, in dem Löschvorrichtungen 13, wie etwa Sprinkler und dergleichen, in Betrieb genommen und der Brand bekämpft wird.

Vorstehend beschrieben sind somit ein Verfahren zur Branderkennung bei industriellen Produktionsmaschinen, sowie eine solche Produktionsmaschine, welche auch bei hohen Produktionstemperaturen vor Beginn eines Löschvorgangs selbsttätig einen sicheren Zustand schaffen, um die Gefahr eines Großbrandes für Mensch und Maschine zu verringern.

### BEZUGSZEICHENLISTE

- 1: Produktionsmaschine
- 2: Sektion
- 3: Tropfenverteiler
- 4: Quittierung
- 5: Infrarotkamera
- 6: Sichtfeld
- 7: Wärmebild
- 8: Bereich
- 9: Produkt
- 10: Prozesssteuerung
- 11: Schlagtaster
- 12: Signalgeber
- 13: Löschvorrichtung
- 14: Überwachung
- 15: Schwellwert überschritten?
- 16: erster Schritt
- 17: Übermittlung Alarmsignal
- 18: zweiter Schritt
- 19: Beendung der Anforderung von Material
- 20: Verarbeitung von Material
- 21: Auswurf von Material und Produkten
- 22: dritter Schritt
- 23: Maschinenstopp
- 24: vierter Schritt

## Patentansprüche

1. Verfahren zur Branderkennung bei Maschinen zur Herstellung von Hohlglas, wobei ein Herstellungsprozess an einer Produktionsmaschine (1) mithilfe einer Prozesssteuerung (10) gesteuert und die Produktionsmaschine (1) von Mitteln zur Branderkennung permanent überwacht wird,
**dadurch gekennzeichnet, dass** in einem ersten Schritt (16) die Mittel zur Branderkennung ein Alarmsignal erzeugen und an die Prozesssteuerung (10) übermitteln, in einem zweiten Schritt (18) die Prozesssteuerung (10) die Anforderung von Material für den Herstellungsprozess beendet und weiteres Material in einem brandsicheren Rückhalt zurückgehalten wird, während die Produktionsmaschine (1) bereits eingelegtes Material verarbeitet oder auswirft und danach gestoppt wird und in einem dritten Schritt (22) alle Material zuführenden und Produkte (9) abführenden Maschinen gestoppt werden.

2. Verfahren gemäß Anspruch 1, **dadurch gekennzeichnet, dass** die Mittel zur Branderkennung wenigstens eine Infrarotkamera (5) umfassen, welche auf die Produktionsmaschine (1) oder auf Teile davon ausgerichtet ist und ein Wärmebild (7) erzeugt, wobei im Fall einer Überschreitung wenigstens eines Wärmeschwellwerts ein Alarmsignal an die Prozesssteuerung (10) übermittelt wird.

3. Verfahren gemäß Anspruch 2, **dadurch gekennzeichnet, dass** ein Sichtfeld (6) der Infrarotkamera (5) in Bereiche (8) unterteilt ist und einem oder mehreren Bereichen (8) ein eigener Wärmeschwellwert zugeordnet ist.

4. Verfahren gemäß einem der Ansprüche 2 oder 3, **dadurch gekennzeichnet, dass** den Infrarotkameras (5) im Bereich ihrer Kameralinsen Luftdüsen zugeordnet sind, welche ein Luftschild zum Schutz der Kameralinsen vor Hitze erzeugen.

5. Verfahren gemäß einem der vorhergehenden Ansprüche, **dadurch gekennzeichnet, dass** nach dem dritten Schritt (22) in einem vierten Schritt (24) wenigstens eine Löschvorrichtung (13) zur Benetzung der Oberflächen der Produktionsmaschine (1) mit einem Löschmittel zugeschaltet wird.

6. Verfahren gemäß einem der vorhergehenden Ansprüche, **dadurch gekennzeichnet, dass** die Prozesssteuerung (10) in Reaktion auf den ersten Schritt (16) einen visuellen und/oder einen akustischen Alarm durch Betätigung von Signalgebern (12) auslöst.

7. Verfahren gemäß einem der vorhergehenden Ansprüche, **dadurch gekennzeichnet, dass** die Prozesssteuerung (10) in dem zweiten Schritt (18) die Kühlung und/oder die Schmierung der Produktionsmaschine (1) deaktiviert.

## Claims

1. Method for detecting fires in machines for producing hollow glass, a production process on a production machine (1) being controlled by means of a process controller (10) and the production machine (1) being permanently monitored by means for detecting fires,
**characterized in that** in a first step (16) the means for detecting fires generate an alarm signal and transmit it to the process controller (10), in a second step (18) the process controller (10) terminates the request for material for the production process and further material is retained in a fireproof support, while the production machine (1) processes or ejects material already inserted and is then stopped, and in a third step (22) all machines supplying material and discharging products (9) are stopped.

2. Method according to claim 1, **characterized in that** the means for detecting fires comprise at least one infrared camera (5) which is aimed at the production machine (1) or at parts thereof and generates a thermal image (7), an alarm signal being transmitted to the process controller (10) in the event of at least one thermal threshold being exceeded.

3. Method according to claim 2, **characterized in that** a field of view (6) of the infrared camera (5) is divided into regions (8) and one or more regions (8) are assigned their own heat threshold value.

4. Method according to any of claims 2 or 3, **characterized in that** the infrared cameras (5) are assigned air nozzles in the region of their camera lenses, which air nozzles create an air shield to protect the camera lenses from heat.

5. Method according to any of the preceding claims, **characterized in that** after the third step (22), in a fourth step (24) at least one extinguishing device (13) is switched on to wet the surfaces of the production machine (1) with an extinguishing agent.

6. Method according to any of the preceding claims, **characterized in that** the process controller (10) triggers a visual and/or an acoustic alarm by actuating signaling transmitters (12) in response to the first step (16).

7. Method according to any of the preceding claims, **characterized in that** the process controller (10) deactivates the cooling and/or lubrication of the production machine (1) in the second step (18).

## Revendications

1. Procédé pour la détection d'incendie dans des machines permettant la fabrication de verre creux, dans lequel un processus de fabrication est commandé sur une machine de production (1) à l'aide d'une commande de processus (10) et la machine de production (1) est surveillée en permanence par des moyens permettant la détection d'incendie,
**caractérisé en ce que,** dans une première étape (16), les moyens permettant la détection d'incendie génèrent un signal d'alarme et le transmettent à la commande de processus (10), dans une deuxième étape (18), la commande de processus (10) met fin à la demande de matériau pour le processus de fabrication et du matériau supplémentaire est retenu dans un élément de retenue ininflammable, tandis que la machine de production (1) traite ou éjecte du matériau déjà inséré et est ensuite arrêtée, et dans une troisième étape (22), toutes les machines amenant du matériau et évacuant des produits (9) sont arrêtées.

2. Procédé selon la revendication 1, **caractérisé en ce que** les moyens permettant la détection d'incendie comprennent au moins une caméra infrarouge (5) qui est orientée vers la machine de production (1) ou vers des parties de celle-ci et qui produit une image thermique (7), dans lequel un signal d'alarme est transmis à la commande de processus (10) en cas de dépassement d'au moins une valeur seuil thermique.

3. Procédé selon la revendication 2, **caractérisé en ce qu'**un champ de vision (6) de la caméra infrarouge (5) est divisé en zones (8) et une valeur seuil thermique propre est associée à une ou plusieurs zones (8).

4. Procédé selon l'une des revendications 2 ou 3, **caractérisé en ce que** les caméras infrarouges (5) sont associées, dans la zone de leurs lentilles de caméra, à des buses d'air qui génèrent un écran d'air permettant de protéger les lentilles de caméra de la chaleur.

5. Procédé selon l'une des revendications précédentes,
**caractérisé en ce que,** après la troisième étape (22), dans une quatrième étape (24), au moins un dispositif d'extinction (13) est commuté pour l'imprégnation des surfaces de la machine de production (1) avec un agent d'extinction.

6. Procédé selon l'une des revendications précédentes,
**caractérisé en ce que** la commande de processus (10) déclenche, en réponse à la première étape (16), une alarme visuelle et/ou une alarme sonore par actionnement d'avertisseurs (12).

7. Procédé selon l'une des revendications précédentes,
**caractérisé en ce que** la commande de processus (10) désactive le refroidissement et/ou la lubrification de la machine de production (1) lors de la deuxième étape (18).
